# EUROPÄISCHE PATENTSCHRIFT

(11) **EP 1 196 038 B1**
(45) Veröffentlichungstag und Bekanntmachung des Hinweises auf die Patenterteilung: **22.10.2003**
(21) Anmeldenummer: 00943816.9
(22) Anmeldetag: 15.06.2000
(51) Int. Cl.: A22C 15/00, A22C 17/10

(54) **AUFHÄNGESCHLAUFE FÜR WÜRSTE O. DGL.**
SUSPENSION LOOP FOR SAUSAGES OR THE LIKE
BOUCLE DE SUSPENSION POUR SAUCISSES OU ANALOGUES

(30) Priorität: 26.07.1999 DE 19934444
(43) Veröffentlichungstag der Anmeldung: 17.04.2002
(73) Patentinhaber: Poly-clip System GmbH, 60489 Frankfurt am Main (DE)
(72) Erfinder: SAUER, Heinrich, D-35510 Butzbach (DE)
(74) Vertreter: Eisenführ, Günther, Dipl.-Ing.
(86) Internationale Anmeldenummer: EP0005534
(87) Internationale Veröffentlichungsnummer: WO01006860

(56) Entgegenhaltungen:
- EP-A- 0 267 871
- EP-A- 0 413 166
- DE-A- 2 913 495
- US-A- 4 227 668
- US-A- 4 426 241

## Beschreibung

Die Erfindung betrifft die Verwendung eines Streifens aus Bandmaterial, der an seinen beiden Enden mit Löchern versehen ist, als Aufhängeschlaufe für Würste o.dgl., die an einem endseitigen Verschlußelement der Wurst befestigbar ist. Sie betrifft ferner einen Wurstendverschluss mit einer solchen Aufhängeschlaufe und ein Verfahren zu seiner Herstellung.

Aufhängeschlaufen, welche die Handhabung beispielsweise von Würsten während der auf den Füllvorgang folgenden Behandlungsschritte (Kochen, Räuchern etc.) erleichtern und überdies der späteren Vorrats-Handhabung dienen, sind vielfäitig bekannt. Sie bestehen derzeit häufig aus endlos geknoteten Schnüren, die beim Verschließen der Wurst beispielsweise in einen Clip eingehängt werden, welcher das zu einem Zopf geraffte Ende der Wursthülle umgibt (DE-A-197 00 891.7). Bekannt geworden sind ferner aus Kunststoff formstabil gespritzte Aufhängeschlaufen, wie sie etwa die DE-A-2 913 495 zeigt. Letztere weist entlang ihrem Schlaufenrand eine Skala auf, die zur Markierung des Herstellungsdatums der Wurst dient. Aus der DE-PS 1 632 140 geht die eingangs angesprochene Aufhängeschlaufe in Form eines umgeschlagenen Bandes hervor, welches die Breite des plissierten Hüllenendes hat und an seinen Enden zu Wülsten verdickt ist, die ein Herausrutschen der Schlaufe aus dem Verschlußelement verhindern sollen.

Neuere Rechtsvorschriften und Verbrauchererwartungen verlangen nicht nur die Angabe des Herstellungsdatums, sondern darüber hinaus von näheren Informationen über die Art des jeweiligen Produkts, der zu seiner Herstellung eingesetzten Inhaltsstoffe, des Herstellers und weiterer einschlägiger Daten am Produkt selbst. Man hat daher zusätzliche Etikettenanhänger vorgesehen, die neben der Aufhängeschlaufe beim Verschließen der Wurst o. dgl. in das Verschlußelement eingehängt werden und sich zum Bedrucken mit den fraglichen Angaben eignen. Es liegt auf der Hand, daß ein solches Vorgehen aufwendig ist und die Gefahr von Betriebsstörungen bei der Wurstherstellung vergrößert. Letzteres gilt auch für die vorerwähnte bandförmige Aufhängeschlaufe namentlich dann, wenn die Endwülste der Befestigung an einem zopfartig gerafften Hüllenende (ebenso wie einem unmittelbar vor dem Verarbeiten erfolgenden Bedrucken) entgegenstehen.

Die Erfindung bezweckt, diesen Nachteilen des Standes der Technik zu begegnen. Sie sieht dazu vor, als Aufhängeschlaufe einen Streifen aus Bandmaterial zu verwenden, der an seinen beiden Enden mit Löchern versehen ist, die bei umgeschlagenem Streifen übereinanderliegen und in die das (noch unverschlossene) Verschlußelement eingeführt wird. Auf diese Weise wird die eingangs geschilderte Funktion einer Aufhängeschlaufe mit der eines - umfangreiche Informationen aufnehmenden - Etiketts in einem einzigen, einheitlichen und zugleich einfachen Element vereinigt. Dieses kann außerdem unschwer magaziniert bevorratet und der Verarbeitung bei einer automatischen Wurstfüllung zugeführt werden.

Streifen aus Bandmaterial mit endseitigen Löchern sind als Abdeckungen für Schriftgut auf Abheftnadeln bekannt. Deren Größe (Lochabstand) ist genormt und regelmäßig zu klein, um im erfindungsgemäßen Sinne verwendet zu werden; auch lag diese andersartige Verwendung nicht nahe. Entsprechendes gilt für das Verfahren zum Ausrüsten eines Wurstendes (o. dgl.) mit einer solchen Aufhängeschlaufe und den Wurstendverschluss selbst, der mit der Aufhängeschlaufe versehen ist.

Vorteilhaft besteht das Bandmaterial aus bedruckbarem Kunststoff; es kann als mehrschichtige Verbundfolie ausgebildet sein.

Im Interesse größerer Haltbarkeit und Tragfähigkeit kann man den Streifen mindestens in den die Löcher umgebenden Bereichen verstärken. In diesen Bereichen kann man mindestens eine der im umgeschlagenen Zustand des Streifens einander zugewandten Flächen selbstklebend beschichten, um das Fluchten der Löcher beim Einführen in das Verschlußelement zu gewährleisten; auch kann die selbstklebende Beschichtung als Haftvermittler bei der Magazinierung auf einem Trägerband dienen.

Die Zeichnungsfiguren veranschaulichen die Erfindung an einem Ausführungsbeispiel, und zwar zeigt:
- Fig. 1: in vergrößertem Maßstab eine Mehrzahl der erfindungsgemäßen "Etikettenschlaufen" in magazinierter Form;
- Fig. 2: die zu einer Schlaufe umgeschlagene und mit übereinanderliegenden Löchern in ein noch unverschlossenes Verschlußelement eingeführte Etikettenschlaufe; und
- Fig. 3: das schließlich - nach dem Verschließen - mit einer erfindungsgemäßen Etikettenschlaufe versehene Ende einer Wurst.

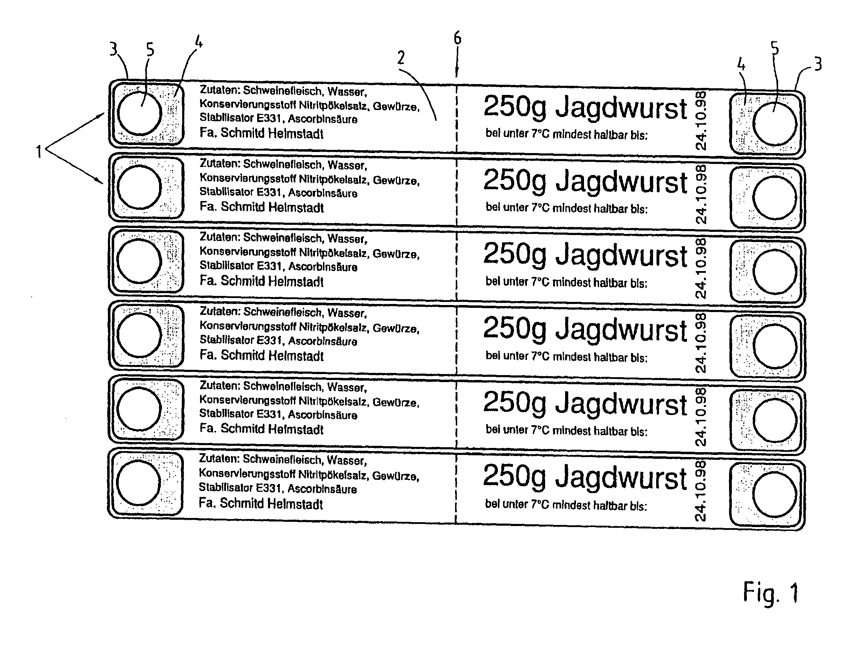

Jede der in Fig. 1 gezeigten Aufhängeschlaufen 1, welche wegen ihrer Doppelfunktion auch als "Etikettenschlaufen" bezeichnet werden können, besteht aus einem bandförmigen Streifen 2 aus Kunststoff. Das Kunststoffmaterial kann mehrschichtig sein, wobei die einzelnen Schichten die unterschiedlichen Anforderungen an die Etikettenschlaufe erfüllen, nämlich einerseits die der Fig. 1 beispielhaft entnehmbare Bedruckung aufzunehmen, und andererseits die erforderliche Festigkeit der Aufhängeschlaufe bei der späteren Bearbeitung (Kochen, Räuchern etc.) der unter ihrer Anbringung verschlossenen Wurst etc. zu gewährleisten. An beiden Enden 3 ist jede Aufhängeschlaufe 1 im Bereich 4 verstärkt und jeweils mit einem Loch 5 versehen.

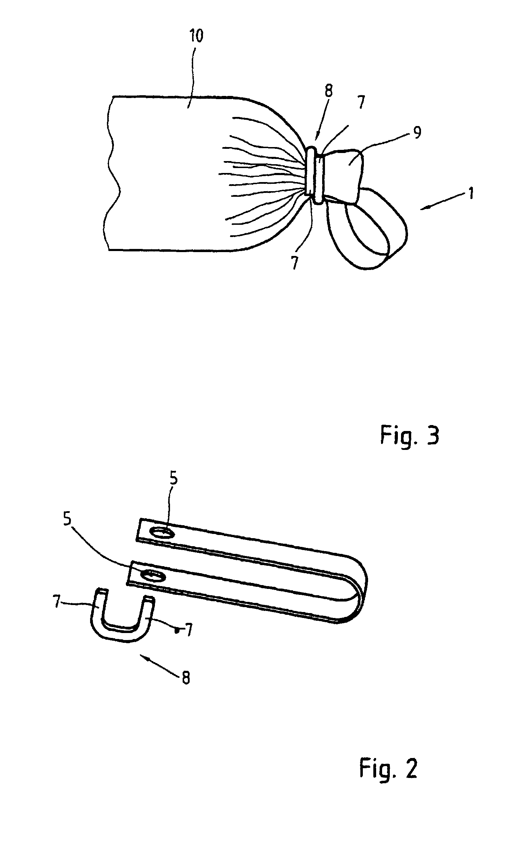

Bei der Bearbeitung wird die Aufhängeschlaufe 1 im Bereich der Mittellinie 6 umgeschlagen, so daß - wie Fig. 2 zeigt - die Löcher 5 miteinander fluchten und - bei Haftkleberbeschichtung - unter entsprechend weiterer Annäherung als der in Fig. 2 gezeigten übereinanderliegend miteinander verklebt werden. In die Löcher 5 wird dann einer der Schenkel 7 des in den Fig. 2 und 3 beispielshalber dargestellten Verschlußelements 8 in Form eines üblichen Drahtclips eingefügt. Dieses wird alsdann, wie Fig. 3 veranschaulicht, um die zu einem Zopf 9 geraffte Wursthülle 10 gebogen und diese dadurch verschlossen.

Die Magazinierung der Streifen 2 kann in deren Längsrichtung erfolgen (Rollenmaterial in Streifenbreite). Fig. 1 veranschaulicht eine Alternative dahingehend, daß ein - nicht dargestelltes - Trägerband von einer der Streifenlänge entsprechenden Breite die Streifen 2 nebeneinander aufnimmt. Das Trägerband kann auch auf zwei schmale Bänder von einer dem jeweiligen Bereich 4 entsprechenden Breite reduziert werden; dann können die Bänder die (bleibende) Verstärkung der Bereiche 4 bilden.

## Patentansprüche

1. Verwendung eines Streifens aus Bandmaterial, der an seinen beiden Enden (3) mit Löchern (5) versehen ist, als Aufhängeschlaufe für Würste o. dgl. mit der Maßgabe, dass der Streifen (2) derart umgeschlagen wird, dass die beiden Löcher (5) übereinanderliegen und in diese ein Verschlusselement (B) für ein Wurstende vor dem Verschließen eingeführt wird.

2. Verwendung nach Anspruch 1,
**dadurch gekennzeichnet, daß** das Bandmaterial aus bedruckbarem Kunststoff besteht.

3. Verwendung nach Anspruch 2,
**dadurch gekennzeichnet, daß** das Bandmaterial als mehrschichtige Verbundfolie ausgebildet ist.

4. Verwendung nach einem der vorhergehenden Ansprüche,
**dadurch gekennzeichnet, daß** der Streifen (2) mindestens in den die Löcher (5) umgebenden Bereichen (4) verstärkt ist.

5. Verwendung nach einem der vorhergehenden Ansprüche,
**dadurch gekennzeichnet, daß** mindestens eine der im umgeschlagenen Zustand des Streifens (2) einander zugewandten Flächen der die Löcher (5) umgebenden Bereiche (4) selbstklebend beschichtet ist.

6. Wurstendverschluss mit einem Verschlusselement und einer an diesem befestigten Aufhängeschlaufe, die aus einem umgeschlagenen Streifen aus Bandmaterial besteht,
**dadurch gekennzeichnet, dass** der Streifen (2) an seinen beiden Enden (3) mit je einem Loch (5) versehen ist, die bei umgeschlagenem Streifen übereinanderliegen und in die das Verschlusselement (8) eingeführt ist.

7. Wurstendverschluss nach Anspruch 6 mit einer Aufhängeschlaufe aus einem Streifen gemäß mindestens einem der Ansprüche 2 bis 5.

8. Verfahren zum Ausrüsten eines mit einem Verschlusselement verschlossenen Wurstendes mit einer Aufhängeschlaufe aus einem Streifen aus Bandmaterial,
**dadurch gekennzeichnet, dass** ein an seinen beiden Enden (3) mit je einem Loch (5) versehener Streifen (2) derart umgeschlagen wird, dass die beiden Löcher (5) übereinanderliegen, und dass hierauf das Verschlusselement (8) durch die Löcher (5) geführt und am Wurstende verschlossen wird.

9. Verfahren nach Anspruch 8 mit einer Aufhängeschlaufe aus einem Streifen gemäß mindestens einem der Ansprüche 2 bis 5.

## Claims

1. Use of a strip of ribbon material which is provided with holes (5) at both of its ends (3) as a suspension loop for sausages or the like provided that the strip (2) is folded over in such a way that the two holes (5) are located over one another and into the latter a closure element (8) for a sausage end is introduced prior to sealing.

2. Use according to Claim 1, **characterised in that** the ribbon material consists of printable plastic.

3. Use according to Claim 2, **characterised in that** the ribbon material is constructed as a multilayered composite film.

4. Use according to any of the preceding claims, **characterised in that** the strip (2) is reinforced at least in the regions (4) surrounding the holes (5).

5. Use according to any of the preceding claims, **characterised in that** at least one of the surfaces of the regions (4) surrounding the holes (5) facing towards one another in the folded state of the strip (2) are coated in self-adhesive manner.

6. Sausage end seal having a closure element and a suspension loop fastened to the latter consisting of a folded-over strip of ribbon material, **characterised in that** the strip (2) is provided with a hole at each of its two ends which in the folded strip are located over one another and into which the closure element (8) is introduced.

7. Sausage end seal according to Claim 6 having a suspension loop composed of a strip according to at least one of Claims 2 to 5.

8. Method for equipping a sausage end sealed by a closure element with a suspension loop composed of a strip of ribbon material, **characterised in that** a strip (2) provided with a hole (5) at each of its two ends (3) is folded over in such a way that the two holes (5) are located over one another and that after this the closure element (8) is led through the holes (5) and sealed at the sausage end.

9. Method according to Claim 8 using a suspension loop composed of a strip according to at least one of Claims 2 to 5.

## Revendications

1. Utilisation d'un ruban constitué d'un matériau en bande qui est muni à ses deux extrémités (3) de trous (5) en tant que boucle de suspension pour des saucisses ou objets comparables, dans la mesure où le ruban (2) est rabattu de telle manière que les deux trous (5) se superposent et qu'un élément de fermeture (8) pour une extrémité de saucisse y est introduit avant la fermeture.

2. Utilisation selon la revendication 1, **caractérisée en ce que** le matériau en bande est en matière plastique qu'on peut imprimer.

3. Utilisation selon la revendication 2, **caractérisée en ce que** le matériau en bande est formé d'une feuille composite à plusieurs couches.

4. Utilisation selon l'une des revendications précédentes, **caractérisée en ce que** le ruban (2) est renforcé au moins dans les zones (4) voisines des trous (5).

5. Utilisation selon l'une des revendications précédentes, **caractérisée en ce qu'**au moins une des surfaces - tournée vers l'autre lorsque le ruban (2) est à l'état rabattu - des zones (4) qui entourent les trous (5) est revêtue de façon autocollante.

6. Fermeture d'extrémité de saucisse comportant un élément de fermeture et une boucle de suspension fixée sur celle-ci, laquelle est constituée d'un ruban rabattu constitué d'un matériau en bande,
**caractérisée en ce que** le ruban (2) est muni respectivement d'un trou (5) à ses deux extrémités (3) qui se font face lorsque les rubans sont rabattus et dans lesquels l'élément de fermeture (8) est introduit.

7. Fermeture d'extrémité de saucisse selon la revendication 6 comportant une boucle de suspension constituée d'un ruban selon au moins l'une des revendications 2 à 5.

8. Procédé pour munir une extrémité de saucisse - fermée par un élément de fermeture - d'une boucle de suspension constituée d'un ruban en un matériau en bande, **caractérisé en ce qu'**un ruban (2) muni à chacune de ses extrémités (3) respectivement d'un trou (5) est rabattu de telle sorte que les deux trous (5) se superposent et qu'ensuite l'élément de fermeture (8) est introduit dans les trous (5) et est fermé à l'extrémité de la saucisse.

9. Procédé selon la revendication 8 comportant une boucle de suspension constituée d'un ruban selon au moins l'une des revendications 2 à 5.
